# EUROPEAN PATENT APPLICATION

(11) **EP 3 301 582 A1**
(43) Date of publication of application: **04.04.2018**
(21) Application number: 17156935.3
(22) Date of filing: 20.02.2017
(51) Int. Cl.: G06F 11/36, G06F 11/26, G06F 9/455

(54) **INFORMATION PROCESSING APPARATUS, INFORMATION PROCESSING METHOD AND PROGRAM**

(30) Priority: 30.09.2016 JP 2016194884
(71) Applicant: Omron Corporation, Kyoto 600-8530 (JP)
(72) Inventor: MATSUZUKA, Akane, Kyoto 600-8530 (JP)
(74) Representative: Becker Kurig Straus

(57) **Abstract**

Provided is an information processing apparatus capable of reducing the time and efforts for correcting a parameter group used by a controller during execution of a control program. The information processing apparatus (10) includes a simulator (51) that simulates a control program to be executed by a controller (30) that controls a machine, a reading part that reads a first format file (16) generated based on a parameter group that is used by the simulator (51) during simulation of the control program, and a generation part that generates and outputs the parameter group to be provided to the controller (30) based on the first format file (16) that has been read.

## Description

### BACKGROUND OF THE INVENTION

### Field of the Invention

The invention relates to a technique for processing information in a memory of a controller that controls a machine.

### Description of Related Art

Conventionally, an information processing apparatus for processing information in a memory of a controller that controls a machine is considered. For example, Patent Literature 1 has disclosed an information processing apparatus that displays the information in a memory of a controller in a predetermined format.

This information processing apparatus is connected to the controller that executes a first control program to control movement of the machine. The information processing apparatus includes a controller interface part, a simulator, and a display data generation part. The controller interface part acquires information of a variable of the first control program from the controller. The simulator simulates the operation of the controller by using a second control program that executes the same processing as the first control program. The simulator inputs the information of the variable of the first control program acquired by the controller interface part to the second control program in a state of stopping execution of the second control program. The display data generation part displays an input result obtained by the aforementioned input.

### [Prior Art Literature]

### [Patent Literature]

Patent Literature 1: Japanese Patent Publication No. 2013-205866

### SUMMARY OF THE INVENTION

### Problem to be Solved

The information processing apparatus of Patent Literature 1, however, is unable to reflect information of the appropriate variable obtained by simulation on the actual operation of the controller. For this reason, it will take time and efforts to correct the information of the variable that is to be used in the controller.

The invention provides a technique for reducing the time and efforts for correcting the parameter group that is to be used by the controller during execution of the control program.

### Solution to the Problem

An information processing apparatus of the invention includes: a simulator simulating a control program to be executed by a controller that controls a machine; a reading part reading a first file generated based on a parameter group that is used by the simulator during simulation of the control program; and a generation part generating and outputting a parameter group to be provided to the controller based on the first file that has been read. The parameter group includes values of various parameters and information relating to various parameters. The information relating to the parameters may include identification information for identifying the parameters, attribute information of the parameters, and so on. For example, the parameter group is setting information that defines the operation of a unit on a system bus or a field bus, setting information that defines the operation of the controller, and setting information that defines the operation of a motion control.

With this configuration, the value of the parameter used when the control program is debugged by the simulator can be written to the controller. As a result, the appropriate value of the parameter obtained through debugging can be reflected in the actual operation of the controller.

According to an embodiment, the reading part reads a second file generated based on a parameter group that is used by the controller during execution of the control program, and the generation part generates and outputs a parameter group to be provided to the simulator based on the second file that has been read. With this configuration, when an abnormality occurs in the controller, the control program can be debugged by the simulator by using the value of the parameter acquired from the controller. Accordingly, it becomes easy to investigate the cause of the abnormality of the controller.

According to an embodiment, the first file includes a value of an attribute-retaining variable of the control program, and the generation part extracts the value of the attribute-retaining variable from the first file that has been read. The attribute-retaining variable of the control program refers to a variable that, in the case where the control program is used by the controller, the value of the variable is retained even when the power supply of the controller is turned off. With this configuration, the appropriate value of the retaining variable of the control program obtained through debugging can be reflected in the actual operation of the controller.

An information processing apparatus of the invention includes: a simulator simulating a control program to be executed by a controller that controls a machine; a storage part storing a file generated based on information of a variable of the control program acquired from the controller; and a generation part generating and outputting the information of the variable of the control program to be provided to the simulator based on the file. With this configuration, same as described above, it becomes easy to investigate the cause of the abnormality of the controller.

### Effects of the Invention

According to the invention, the time and efforts for correcting the parameter group to be used by the controller during execution of the control program are reduced.

### BRIEF DESCRIPTION OF THE DRAWINGS

FIG. 1 is a block diagram showing the configuration of the control system according to this embodiment.
FIG. 2 is a block diagram showing the configuration of the information processing apparatus 10.
FIG. 3 is a block diagram showing the configuration of the controller 30.
FIG. 4 is a functional block diagram for illustrating the process executed by the information processing apparatus 10.
FIG. 5A is a diagram for illustrating the configuration of the first format file 16.
FIG. 5B is a diagram for illustrating the configuration of the second format file 17.
FIG. 6 is a flowchart showing the backup process relating to the simulator 51.
FIG. 7 is a flowchart showing the backup process relating to the controller 30.
FIG. 8 is a flowchart showing the restoration process relating to the simulator 51.
FIG. 9 is a flowchart showing the restoration process relating to the controller 30.

### DESCRIPTION OF THE EMBODIMENTS

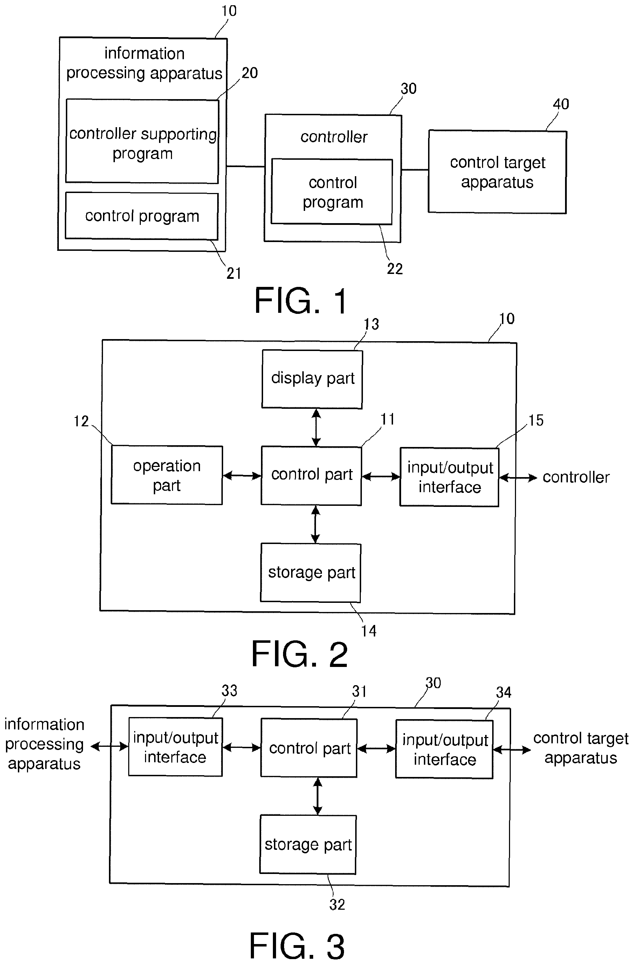

A control system according to an embodiment of the invention is described hereinafter. FIG. 1 is a block diagram showing a configuration of the control system according to this embodiment. The control system according to this embodiment includes an information processing apparatus 10, a controller 30, and a control target apparatus 40. The control target apparatus 40 is an example of the "machine" of the invention. The information processing apparatus 10 is connected to the controller 30 in a communicable manner. The controller 30 is connected to the control target apparatus 40 in a communicable manner. The controller 30 is further connected to a sensor, etc. (not shown). The information processing apparatus 10 is a PC (personal computer), for example. The controller 30 is a PLC (programmable logic controller), for example. The control target apparatus 40 has a motor and a motor driver for driving the motor, for example.

A control program 22 is stored in the controller 30. The control program 22 defines a control content for the control target apparatus 40. The controller 30 executes the control program 22 to control the control target apparatus 40. A controller supporting program 20 and a control program 21 are stored in the information processing apparatus 10. The controller supporting program 20 defines a development environment of the control program for the controller 30 to control the control target apparatus. The control program 21 defines the same control content as the control program 22. The control program 21 is used for simulation of the control program 22, as will be described later.

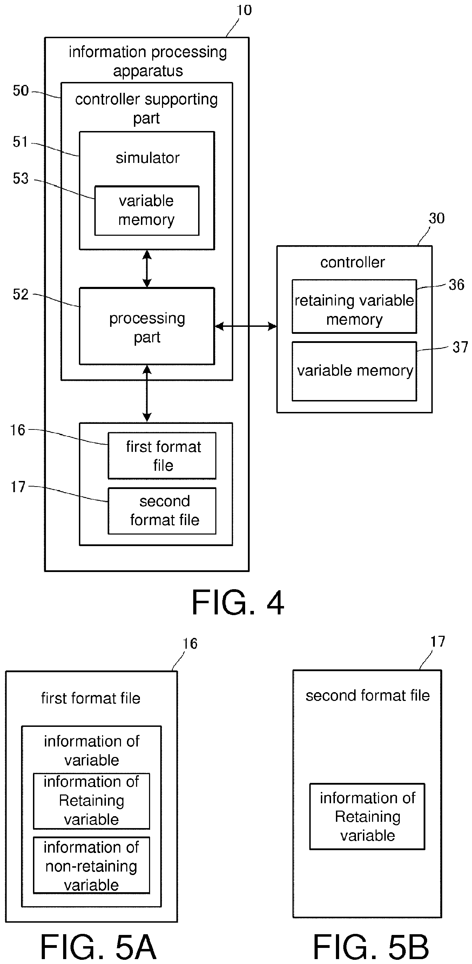

FIG. 2 is a block diagram showing a configuration of the information processing apparatus 10. The information processing apparatus 10 includes a control part 11, an operation part 12, a display part 13, a storage part 14, and an input/output interface 15. The control part 11 includes a CPU (central processing unit), etc., and controls the overall operation of the information processing apparatus 10. The operation part 12 includes a keyboard and/or a mouse, for example. The display part 13 is a liquid crystal display, for example, and may also be a CRT (cathode ray tube) display or a plasma display. The storage part 14 includes a ROM (Read Only Memory), a RAM (Random Access Memory), and/or a hard disk drive, for example. The storage part 14 stores the controller supporting program 20 and the control program 21 (refer to FIG. 1). The storage part 14 includes a variable memory 53 (refer to FIG. 4), which will be described later. The input/output interface 15 provides communication between the control part 11 and the controller 30.

FIG. 3 is a block diagram showing a configuration of the controller 30. The controller 30 includes a control part 31, a storage part 32, and input/output interfaces 33 and 34. The control part 31 includes a CPU, etc., and controls the overall operation of the controller 30. The storage part 32 includes a ROM, a RAM, and/or a battery backed-up memory, for example. The storage part 32 stores the control program 22 (refer to FIG. 1). The storage part 32 includes a retaining variable memory 36 and a variable memory 37, which will be described later. The input/output interface 33 provides communication between the control part 31 and the information processing apparatus 10. The input/output interface 34 provides communication between the control part 31 and the control target apparatus 40.

FIG. 4 is a functional block diagram for illustrating a process executed by the information processing apparatus 10. FIG. 5A is a diagram for illustrating a configuration of a first format file 16. FIG. 5B is a diagram for illustrating a configuration of a second format file 17. The first format file 16 is generated based on information of a variable of the control program 21 that a simulator 51 uses during simulation of the control program 22 (refer to FIG. 1). In particular, the first format file 16 contains the value of a retaining variable of the control program 21. The second format file 17 is generated based on information of a retaining variable of the control program 22 that the controller 30 uses during execution of the control program 22. The first format file 16 is an example of the "first file" of the invention. The second format file 17 is an example of the "second file" of the invention. The information of the variable and the information of the retaining variable are an example of the "parameter group" of the invention. For example, the "parameter group" of the invention is setting information that defines the operation of a unit on a system bus or a field bus, setting information that defines the operation of a controller, and setting information that defines the operation of a motion control. The retaining variable is an example of the "attribute-retaining variable" of the invention.

The variable of the control program is a variable used in the control program, and includes a retaining variable and a non-retaining variable. The retaining variable of the control program refers to a variable that, in the case where the control program is used by the controller, the value of the variable is retained even when the power supply of the controller is turned off. The non-retaining variable of the control program refers to a variable that, in the case where the control program is used by the controller, the value of the variable is lost when the power supply of the controller is turned off. The information of the variable includes a variable name, a type of the variable, and the value of the variable. The type of the variable is Bool, Int, etc.

After reading (after loading) the first format file 16, a processing part 52 generates and outputs the information of the retaining variable of the control program 22 to be provided to the controller 30 based on the first format file 16 that has been read. That is, the processing part 52 generates the information of the retaining variable to be provided to the controller 30 by extracting the value of the retaining variable from the first format file 16. After reading the second format file 17, the processing part 52 generates and outputs the information of the retaining variable of the control program 21 to be provided to the simulator 51 based on the second format file 17 that has been read. The processing part 52 includes the "reading part" and "generation part" of the invention.

The controller 30 executes the control program 22, as described above, to control the control target apparatus 40. During execution of the control program 22, a current value of the variable of the control program 22 is stored in the variable memory 37. The variable memory 37 includes a volatile memory. When the power supply of the controller 30 is turned off or when an abnormality occurs in the controller 30, the value of the retaining variable of the control program 22 stored in the variable memory 37 at that time is stored (backed up) into the retaining variable memory 36. The retaining variable memory 36 may be a battery backed-up memory or a non-volatile memory, such as a flash memory, for example.

The first format file 16 and the second format file 17 are saved in a non-volatile memory of the storage part 14 (refer to FIG. 2). The first format file 16 stores the information of the variable of the control program 21 acquired from the simulator 51. The first format file 16 stores the value of the variable of the control program 21 acquired from the variable memory 53, which will be described later. The second format file 17 stores the information of the retaining variable of the control program 22 acquired from the controller 30. The second format file 17 stores the value of the retaining variable of the control program 22 acquired from the retaining variable memory 36. The first format file 16 is saved in a first storage format. The second format file 17 is saved in a second storage format. In other words, the first format file 16 and the second format file 17 are saved in different file formats (storage formats).

Nevertheless, the first format file 16 may store information of a variable of a control program acquired from another simulator that functions the same as the simulator 51. The second format file 17 may store information of a retaining variable of a control program acquired from another controller that functions the same as the controller 30. In addition, the first format file 16 and the second format file 17 may be saved in an external storage device, such as a removable medium, connected to the information processing apparatus 10.

The information processing apparatus 10 includes a controller supporting part 50. The controller supporting part 50 provides a development environment for the control program defined by the controller supporting program 20. The controller supporting part 50 includes the simulator 51 and the processing part 52.

The simulator 51 simulates the control program 22 by using the control program 21. That is, the simulator 51 uses the control program 21 to simulate the operation of the controller 30 executing the control program 22. Thus, the control program 21 may be debugged to check the operation logic of the control program 22, each setting parameter, etc., without connecting the information processing apparatus 10 online to the controller 30. In the simulation performed by the simulator 51, the current value of the variable of the control program 21 is stored in the variable memory 53. The variable memory 53 includes a volatile memory.

When receiving a first backup command during the simulation performed by the simulator 51, the processing part 52 saves (backs up) the information of the variable of the control program 21 in the first storage format. The value of the variable saved at this time is a value acquired from the variable memory 53 when the processing part 52 receives the first backup command. A storage destination of the first format file 16 generated at this time may be a predetermined storage destination or a storage destination specified by a user during execution of the backup. The first backup command is generated when the user performs a predetermined operation, for example. When receiving a predetermined command from the user, the processing part 52 writes (restores) the value of the variable of the control program 21 stored in the first format file 16 to the variable memory 53.

The user uses the backup and restoration functions as follows, for example. When a bug occurs during simulation, the user saves the value of the variable of the control program 21 at that time. Then, after correcting the control program 21, the user uses the value of the variable of the control program 21 that has been saved to execute the simulation again. Thereby, the user is able to check whether the bug has been eliminated.

When receiving a second backup command during execution of the control program 22 performed by the controller 30, the processing part 52 saves (backs up) the information of the retaining variable of the control program 22 in the second storage format. The value of the retaining variable saved at this time is a value acquired from the retaining variable memory 36 when the processing part 52 receives the second backup command. A storage destination of the second format file 17 generated at this time may be a predetermined storage destination or a storage destination specified by the user during execution of the backup. The second backup command is generated, for example, when the user performs a predetermined operation, when an abnormality occurs in the controller, and so on. When receiving a predetermined command from the user, the processing part 52 writes (restores) the value of the retaining variable of the control program 22 stored in the second format file 17 to the retaining variable memory 36.

The user uses the backup and restoration functions as follows, for example. In the case of exchanging the controller 30, the user saves the content that is in the retaining variable memory of the controller 30 before the exchange, and writes the content to the retaining variable memory of the controller 30 after the exchange. Thus, the value of the retaining variable of the control program 22 that has been used in the controller 30 before the exchange can still be used in the controller 30 after the exchange. Moreover, in the case of temporarily changing the value of the retaining variable of the control program 22, the user changes the value of the retaining variable after saving the value of the retaining variable. Then, the user writes the value of the retaining variable that has been saved into the retaining variable memory 36, so as to restore the value of the retaining variable to the original value. Furthermore, the user manages the second format file 17 for the purpose of recipe management and writes the value of the retaining variable in the second format file 17 to the retaining variable memory 36 as necessary.

Besides, when receiving a predetermined command from the user, the processing part 52 writes (restores) the value of the retaining variable of the control program 21 stored in the first format file 16 to the retaining variable memory 36 of the controller 30. When receiving a predetermined command from the user, the processing part 52 writes (restores) the value of the retaining variable of the control program 21 stored in the second format file 17 to the variable memory 53 used by the simulator 51. An example of use of the restoration function will be described later.

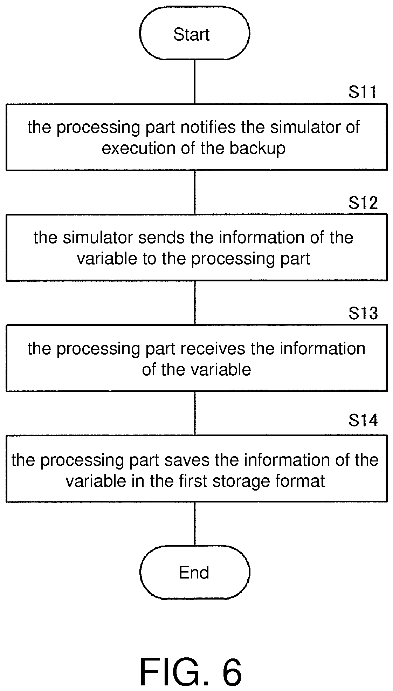

FIG. 6 is a flowchart showing the backup process relating to the simulator 51. When receiving the first backup command during the simulation performed by the simulator 51, the processing part 52 notifies the simulator 51 of execution of the backup (S11). When receiving a notification of execution of the backup, the simulator 51 sends the information of the variable of the control program 21 to the processing part 52 (S12). The processing part 52 receives the information of the variable of the control program 21 sent from the simulator 51 (S13). The processing part 52 saves the information of the variable of the control program 21 that has been received in the first storage format (S14).

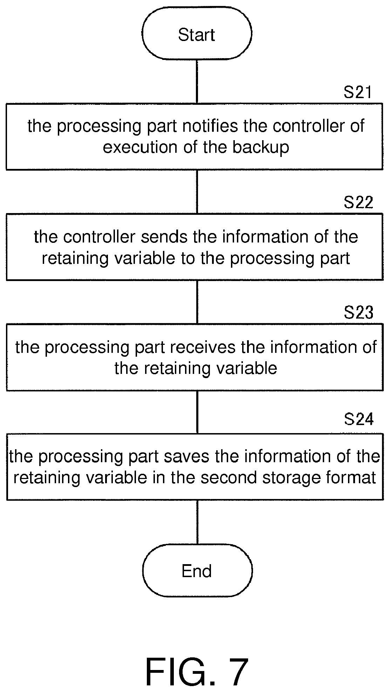

FIG. 7 is a flowchart showing the backup process relating to the controller 30. When receiving the second backup command during execution of the control program 22 performed by the controller 30, the processing part 52 notifies the controller 30 of execution of the backup (S21). When receiving a notification of execution of the backup, the controller 30 sends the information of the retaining variable of the control program 22 to the processing part 52 (S22). The processing part 52 receives the information of the retaining variable sent from the controller 30 (S23). The processing part 52 saves the information of the retaining variable that has been received in the second storage format (S24).

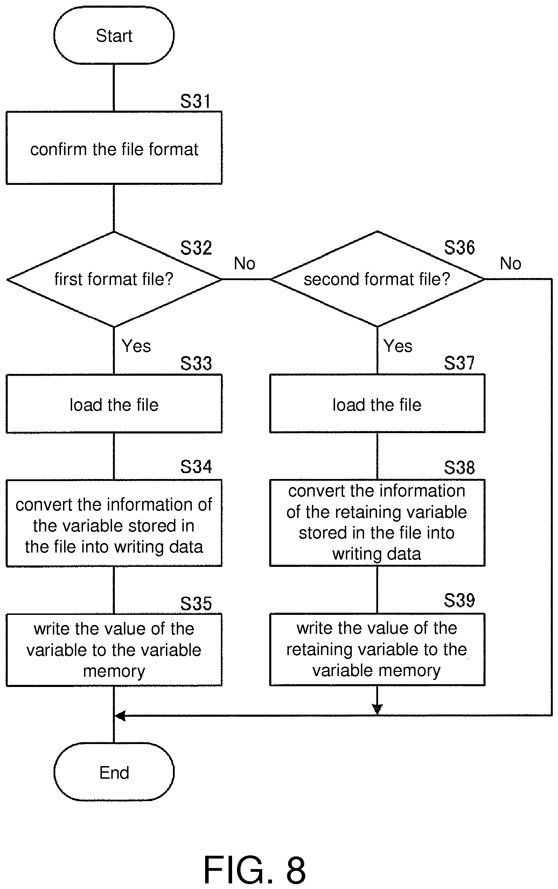

FIG. 8 is a flowchart showing the restoration process relating to the simulator 51. When receiving a first restoration command from the user, the processing part 52 reads a header of the file specified by the user to confirm the file format (S31). If the file is neither the first format file 16 nor the second format file 17 (S32: No, S36: No), the processing part 52 ends the restoration process.

If the specified file is the first format file 16 (S32: Yes), the processing part 52 loads the file (S33). Next, the processing part 52 converts the information of the variable stored in the file into writing data used for writing to the variable memory 53 (S34). Thereafter, the processing part 52 uses the writing data to write the value of the variable included in the writing data to the variable memory 53 (S35). At this time, the value of the variable is written to a storage area on the variable memory 53 assigned to the variable of the control program 21 that has the same variable name as the variable. Then, the processing part 52 ends the restoration process.

If the specified file is the second format file 17 (S32: No, S36: Yes), the processing part 52 loads the file (S37). Next, the processing part 52 converts the information of the retaining variable stored in the file into writing data used for writing to the variable memory 53 (S38). Thereafter, the processing part 52 uses the writing data to write the value of the retaining variable included in the data to the variable memory 53 (S39). At this time, the value of the retaining variable is written to a storage area on the variable memory 53 assigned to the retaining variable of the control program 21 that has the same variable name as the retaining variable. Then, the processing part 52 ends the restoration process.

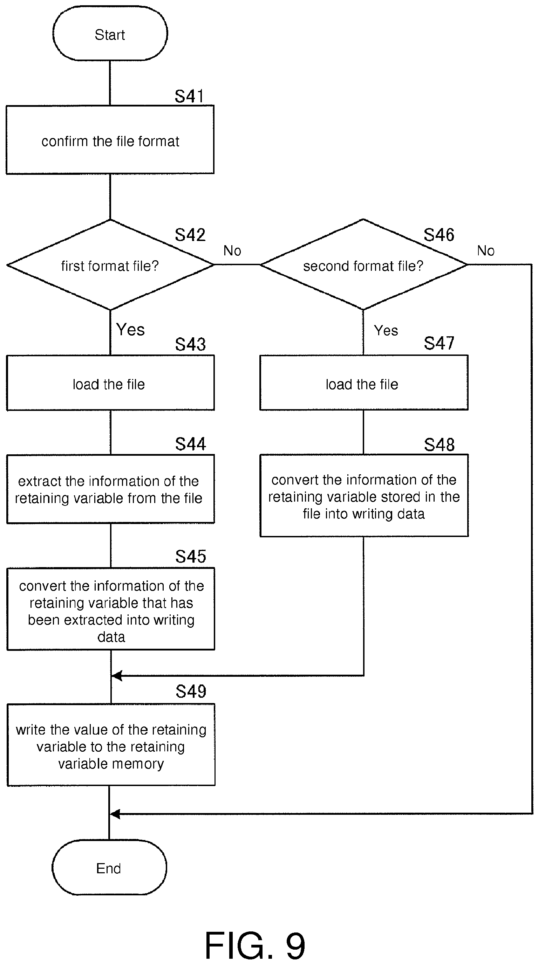

FIG. 9 is a flowchart showing the restoration process relating to the controller 30. When receiving a second restoration command from the user, the processing part 52 reads a header of the file specified by the user to confirm the file format (S41). If the file is neither the first format file 16 nor the second format file 17 (S42: No, S46: No), the processing part 52 ends the restoration process.

If the specified file is the first format file 16 (S42: Yes), the processing part 52 loads the file (S43). Next, the processing part 52 extracts the information of the retaining variable from the information of the variable stored in the file (S44). Then, the processing part 52 converts the information of the retaining variable that has been extracted into writing data used for writing to the retaining variable memory 36 (S45). If the specified file is the second format file 17 (S42: No, S46: Yes), the processing part 52 loads the file (S47). Next, the processing part 52 converts the information of the retaining variable stored in the file into writing data used for writing to the retaining variable memory 36 (S48).

Following Steps S45 and S48, the processing part 52 uses the writing data to write the value of the retaining variable included in the writing data to the retaining variable memory 36 (S49). Specifically, the processing part 52 sends the writing data to the controller 30 and instructs the controller 30 so as to write the value of the retaining variable included in the writing data to the retaining variable memory 36. At this time, the value of the retaining variable is written to a storage area on the retaining variable memory 36 assigned to the retaining variable of the control program 22 that has the same variable name as the retaining variable. Then, the processing part 52 ends the restoration process.

Table 1 shows the file formats that are available to a conventional information processing apparatus during backup and restoration. The conventional information processing apparatus saves the information of the variable acquired from the simulator 51 in the first storage format and saves the information of the retaining variable acquired from the controller 30 in the second storage format. The conventional information processing apparatus can write the value of the variable in the first format file to the simulator 51 but cannot write the value of the retaining variable in the second format file to the simulator 51. The conventional information processing apparatus can write the value of the retaining variable in the second format file to the controller 30 but cannot write the value of the retaining variable in the first format file to the controller 30.

**Table 1**

| | simulator | controller |
|---|---|---|
| backup | first format file | second format file |
| restore | first format file | second format file |

Table 2 shows the file formats that are available to the information processing apparatus 10 during backup and restoration. The information processing apparatus 10 saves the information of the variable acquired from the simulator 51 in the first storage format and saves the information of the retaining variable acquired from the controller 30 in the second storage format. The information processing apparatus 10 is capable of writing the value of the variable in the first format file 16 and the value of the retaining variable in the second format file 17 to the simulator 51. The information processing apparatus 10 is capable of writing the values of the retaining variables stored in the first format file 16 and the second format file 17 to the controller 30. In other words, the information processing apparatus 10 executes the backup and restoration processes for the controller 30 and the simulator 51 to share the backup file.

**Table 2**

| | simulator | controller |
|---|---|---|
| backup | first format file | second format file |
| restore | first format file | first format file |
| | second format file | second format file |

With the information processing apparatus 10, it is possible to write the value of the retaining variable of the control program 21 acquired from the simulator 51 to the retaining variable memory 36 of the controller 30 by using the first format file 16. Therefore, the value of the retaining variable of the control program 21, which has been used when the control program 21 is debugged by the simulator 51, can be written to the retaining variable memory 36 of the controller 30. As a result, the appropriate value of the retaining variable of the control program 22 obtained through debugging is reflected in the actual operation of the controller 30.

Moreover, with the information processing apparatus 10, it is possible to write the value of the retaining variable of the control program 22 acquired from the controller 30 to the variable memory 53 used by the simulator 51 by using the second format file 17. Therefore, when an abnormality occurs in the controller 30, the control program 21 can be debugged in the simulator 51 by using the value of the retaining variable of the control program 22 acquired from the controller 30. Accordingly, it becomes easy to investigate the cause of the abnormality of the controller 30.

The information processing apparatus 10 is also capable of executing the restoration process by using the first format file and the second format file generated by the conventional information processing apparatus. Furthermore, the conventional information processing apparatus may execute the restoration process on the simulator 51 by using the first format file 16 generated by the information processing apparatus 10. The conventional information processing apparatus may execute the restoration process on the controller 30 by using the second format file 17 generated by the information processing apparatus 10.

This embodiment illustrates an example where the information to be backed up and restored is the information of the variable of the control program. However, the information to be backed up and restored may include any memory information of the controller, and may for example include slave parameters, current values of the controller memory, axis parameters, etc.

## Claims

1. An information processing apparatus (10), comprising:
a simulator (51) simulating a control program (22) to be executed by a controller (30) that controls a machine (40);
a reading part (52) reading a first file (16) generated based on a parameter group that is used by the simulator (51) during simulation of the control program (22); and
a generation part (52) generating and outputting a parameter group to be provided to the controller (30) based on the first file (16) that has been read.

2. The information processing apparatus (10) according to claim 1, wherein
the reading part (52) reads a second file (17) generated based on a parameter group that is used by the controller (30) during execution of the control program (22), and
the generation part (52) generates and outputs a parameter group to be provided to the simulator (51) based on the second file (17) that has been read.

3. The information processing apparatus (10) according to claim 1 or 2, wherein the first file (16) comprises a value of an attribute-retaining variable of the control program (22), and
the generation part (52) extracts the value of the attribute-retaining variable from the first file (16).

4. An information processing apparatus (10), comprising:
a simulator (51) simulating a control program (22) to be executed by a controller (30) that controls a machine (40);
a reading part (52) reading a file (17) generated based on a parameter group that is used by the controller (30) during execution of the control program (22); and
a generation part (52) generating and outputting a parameter group to be provided to the simulator (51) based on the file (17).

5. An information processing method executed by a computer simulating a control program (22) to be executed by a controller (30) that controls a machine (40), wherein the computer executes:
a step of reading a first file (16) generated based on a parameter group that is used by the computer during simulation of the control program (22); and
a step of generating and outputting a parameter group to be provided to the controller (30) based on the first file (16) that has been read.

6. A program enabling a computer to simulate a control program (22) to be executed by a controller (30) that controls a machine (40), wherein the computer executes:
a step of reading a first file (16) generated based on a parameter group that is used by the computer during simulation of the control program (22); and
a step of generating and outputting a parameter group to be provided to the controller (30) based on the first file (16) that has been read.
